# EUROPEAN PATENT SPECIFICATION

(11) **EP 2 962 572 B1**
(45) Date of publication and mention of the grant of the patent: **12.04.2017**
(21) Application number: 15174175.8
(22) Date of filing: 26.06.2015
(51) Int. Cl.: A21D 8/04, A21D 2/26, A21D 2/38, A21D 13/00, A21D 13/02

(54) **PROCESS FOR MAKING BAKED PRODUCTS AND BAKED PRODUCT DIVIDABLE INTO TWO CONCAVE PORTIONS ALONG THE PERIMETER EDGE THEREOF**
VERFAHREN ZUR HERSTELLUNG VON GEBACKENEN ERZEUGNISSEN UND GEBACKENE ERZEUGNISSE, DIE ENTLANG IHRES UMFANGS IN ZWEI KONKAVE BESTANDTEILE TRENNBAR SIND
PROCEDE POUR LA PREPARATION DE PRODUITS DE BOULANGERIE ET PRODUITS DE BOULANGERIE SEPARABLES EN DEUX UNITES CONCAVES LE LONG LEURS PERIMETRES

(30) Priority: 30.06.2014 IT PR20140042
(43) Date of publication of application: 06.01.2016
(73) Proprietor: Fantuzzi, Davide, 42049 Sant'Ilario d'Enza (RE) (IT)
(72) Inventor: Fantuzzi, Davide, 42049 Sant'Ilario d'Enza (RE) (IT)
(74) Representative: Dondi, Silvia

(56) References cited:
- EP-A1- 1 574 137
- EP-A2- 0 145 367
- WO-A1-2005/011406
- DE-A1-102012 000 021
- US-A1- 2002 015 760
- Anonymous: "Video Ricetta Pane Carasau (Carta Musica) ||VivaLaFocaccia", , 22 May 2013 (2013-05-22), XP055169856, Retrieved from the Internet: URL:http://vivalafocaccia.com/2013/05/22/v ideo-ricetta-pane-carasau-carta-musica/ [retrieved on 2015-02-16]

## Description

The present invention relates to a process for making baked products. The industrial reference sector is the food sector, particularly that of bread substitutes.

Bread substitutes are generally distinguished by a particularly balanced composition of ingredients from a dietary-nutritional point of view and are appreciated by consumers due to their prolonged shelf life.

On the market there are various baked bread substitutes, diversified by composition, shape and packaging, such as, for example, crackers, breadsticks, flat breads, melba toasts, dry bagels, croutons, rice cakes, etc.

For example, patent EP1529442 describes a method for the production of breadsticks having a substantially U-shaped cross section.

Patent JP2664568 describes a cracker browned in the oven, whose dough includes wheat flour, vegetable oil, wheat starch, yeast, salt, barley and corn malt extract, flavourings and a raising agent (sodium bicarbonate).

In general, the bread substitutes present on the market are suitable to accompany main courses but are not suitable in association with salsas, sauces, creams, creamy cheeses or seasonings due to their flattened shape (e.g. crackers, flat breads, melba toasts, rice cakes) or elongated shape (e.g. bread sticks) or their dry and friable consistency, which prevents the absorption of seasonings and/or makes the product fragile and at risk of breaking or crumbling.

In fact, to collect or absorb seasonings, fresh, perishable products are preferable, such as bread or focaccia.

Document WO2005/011406 also discloses a process for making croissants or puff pastry, wherein the dough remains wet enough to give it softness and, at the same time, it has a reduced fat content.

Document EP1574137, on the other hand, describes a process for making crackers, comprising the following steps:
- making a pre-dough with soft wheat flour, yeast and water;
- letting the pre-dough rise in an environment with 85% relative humidity at a temperature of 26°C for 90 minutes;
- starting from the pre-dough, obtaining a dough for crackers by adding soft wheat flour, enzymes, salt, olive oil, yeast and malt extract;
- letting the dough rise in a cell at the temperature of 28°C at relative humidity of 85% for 120 minutes;
- rolling the dough by passing it under calibrating cylinders to obtain two sheets having a thickness comprised between 7 mm and 3 mm;
- depositing on one of the two sheets a separation agent (e.g. an edible flour such as potato starch) in which a swelling agent is uniformly dispersed (e.g. a chemical yeast such as sodium bicarbonate) and then placing the other sheet on top of it so as to obtain a composite sheet;
- rolling the composite sheet by passing it under calibrating cylinders until it has a thickness comprised between 3 mm and 1 mm;
- forming the composite sheet and obtaining a plurality of flat and drop-shaped semi-finished products;
- baking the semi-finished products in the oven at a temperature of 180°C-200°C for 5-8 minutes.

During the baking in the oven the chemical yeast is activated, which makes the semi-finished products swell becoming hollow bodies.

After baking, the hollow bodies are divided into two concave parts due to the effect of light mechanical shaking (e.g. by passing on a conveyor belt) or even spontaneously.

It must be noted that the combined presence of chemical yeast and the separation agent in the mixture of powder interposed between the two sheets determines the swelling of the flat semi-finished products, causing a practically immediate separation of the two concave parts as soon as they have been baked.

In this context, the technical task underpinning the present invention is to propose a process for making baked products which overcomes the disadvantages of the known art quoted above.

Another object of the present invention is to provide a process for making baked products that have a long shelf life, are friable, strong and versatile, i.e. that can be associated with the most varied of main courses.

The defined technical task and the specified objects thereof are substantially achieved by a process for making baked products comprising the following steps:
- preparing a dough with flour, water, salt, leaven and malt extract, preferably with diastatic power no greater than 5000 P.U, and more preferably of zero;
- refining the dough obtained by passing it several times under a plurality of rollers or rotating cylinders and always folding it in half before the subsequent passage under said rollers;
- sprinkling it with remilled durum wheat semolina and folding it in half so as to obtain a composite puff pastry;
- allowing the composite puff pastry to rest for a predefined number of hours at a temperature comprised between 2°C and 10°C in such a way as to let it rise;
- gradually lowering the height of the risen composite puff pastry until it reaches a height comprised between 0.5 mm and 1 mm circa;
- cutting the rolled out composite puff pastry into a plurality of pieces or unfinished products having a geometrical shape with a plurality of corners;
- arranging the cut pieces at least 1 mm apart;
- baking the pieces obtained at a temperature of between about 200°C-230°C, and then baking them for about 12-20 minutes at a temperature of between 150°C and 180°C circa until obtaining hollow baked products, each of said baked products having a line of weakening along the perimeter edge of the starting unfinished product.

In a first and a second example described, the flour used to prepare the dough has a strength W of about 350.

In such examples, the dough is left to rest for 24-48 hours circa.

In a third example described, the flour used to prepare the dough is a flour with strength W of about 350 mixed with an organic wholegrain semolina flour.

In such example, the dough is left to rest for a maximum of 24 hours.

In all the examples described, the step of gradually lowering the height of the risen composite puff pastry is performed by passing the dough through a sheeter machine until reducing the height to around 0.8 mm, and then passing the sheet of dough through a calibrator until obtaining a height of about 0.5 mm.

Further characteristics and advantages of the present invention will appear more clearly from the indicative, and therefore non-limitative, description of a preferred but not exclusive embodiment of a process for making baked products, as illustrated in the appended drawings wherein:
- Figure 1 illustrates some unfinished products afforded during the process for making baked products, according to the present invention, in a view from above;
- Figure 2 illustrates a baked product dividable into two concave portions along the perimeter edge thereof, obtained from the process according to the present invention, in perspective view;
- Figure 3 illustrates the two divided concave portions of the baked product of figure 2, in perspective view.

The process for making baked products, in particular bread substitutes, is described as follows.

The first step consists of preparing the dough with flour, water, salt, leaven and malt extract.

Preferably, the flour used is a strong flour or a special flour. As is known, the strength of a flour indicates its ability to withstand the processing over time. The strength of the flour derives from the quality of the wheat used to produce it, i.e. from the protein content of the latter. In particular, the proteins that contribute to the strength of the flour are gliadin and glutenin. These simple proteins, when placed in contact with water, form a protein complex (gluten) which constitutes the supporting structure of the dough and therefore defines the "strength" of the flour.

The strength of the flour is indicated by the so-called strength W which represents the total energy needed to break the dough, i.e. to deform the gluten bonds.

Strong flours, obtained from national or foreign wheats, have a strength W comprised between 250 and 310. In fact, such flours oppose strong resistance to the deformation of the gluten.

Special flours, obtained from foreign durum wheats (for example American or Canadian) have a strength W comprised between 310 and 370 circa, or even greater than 400 (e.g. Manitoba flour).

The preferred choice of strong or special flours for the dough proposed herein is connected with their high water absorption ability, which makes the dough tougher and stronger thanks to the formation of very solid gluten bonds. The dough obtained with these flours is dry and elastic since the very resistant gluten bond is able to withhold the starches and the carbon dioxide well, contrasting deflation.

Strong flours have a water absorption power comprised between 65% and 75% of their weight and are suitable for long rising times. Special flours have a water absorption around 90% of their weight and are suitable for special processes and rising.

In the first two embodiments of the invention, using strong flours with strength W of about 350, long rising times are necessary (minimum 24 hours, as mentioned below).

In the third embodiment of the invention, on the other hand, a wholegrain semolina flour is used, i.e. a weak flour, mixed with a strong flour. Alternatively, it is possible to use a wholegrain spelt flour mixed with a strong flour.

Preferably, the leaven used is compressed leaven, otherwise known as brewer's yeast.

As is known, in breadmaking, malt extract is used to provide simple sugars for the dough so as to increase the enzyme and fermentation activity. In fact, yeasts exclusively feed on simple sugars.

The enzyme capacity of malt extract, expressed as "diastatic power" is the capacity of amylase to break the carbon bonds and to convert the sugars contained in the flour to carbon dioxide and water. Diastatic power is measured in Pollak units (P.U.) where 1 P.U. is the quantity of maltose produced by 1000 g of malt extract in the first 30 minutes of fermentation. In the process proposed herein, it is preferable to use a malt extract having low diastatic power, i.e. no greater than 5000 P.U., in order to allow regular development of the dough, extending the fermentation times.

The optimal development of the dough is obtained using a non-diastatic malt extract, i.e. with zero diastatic power (0 P.U.).

In fact, non-diastatic malt extract only provides sugars useful for the leaven to ferment, hence not affecting the starch contained in the flour and, therefore, not weakening the gluten. The choice of a non-diastatic malt extract is particularly suitable for doughs with semolina flour since it allows a significant development of the product despite the flour being weak.

For example, the doses of the dough ingredients, in percentages of the weight of the flour, are: water 35%, extra virgin olive oil 5%, vegetable fat 4%, iodized salt 2%, non-diastatic malt extract 2%, compressed leaven 1%.

Different aromatized variations of the dough are envisaged, for example, through adding tomato concentrate or grated Parmigiano Reggiano cheese.

Furthermore, sweet or semi-sweet variations are envisaged in which, for example, the following are added to the dough: hazelnut paste or pistachio paste or coffee, etc. Preferably in these variations sunflower oil is used instead of extra virgin olive oil.

The finished dough reaches a temperature of about 27°C, after which it is cooled immediately.

Starting from the ingredients listed above, the step of preparing the dough is performed with the autolysis technique. Water, salt, malt extract and extra virgin olive oil are initially emulsified.

It must be noted that the salt must dissolve immediately to prevent any unincorporated grains of salt remaining in the dough to be formed (firm and dry) and to prevent any "dots" of undissolved salt being visible and perceivable in the finished products.

The flour and vegetable fat are added to the emulsion, after which the dough is processed for about 5 minutes using a mixer. At the end, the mixer is stopped for about 10 minutes so that the dry and lumpy dough, can stretch. Finally, the leaven is added to the dough and the dough is processed for about another 5 minutes.

Once it has been prepared, the dough is spread out and folded in half. Then the refining step begins, in which the dough is repeatedly passed under a plurality of rollers or rotating cylinders. In the specific technical sector, this step is also known as rolling.

At the end of each step under the rollers and before the next step, the dough is always folded in half.

Preferably, the refining step is performed through automatic rolling cylinders formed by a bottom mat that feeds the dough to the rollers and a top mat receiving the dough leaving the rollers. The dough leaving the top mat is folded onto itself on the bottom mat.

The refining step aims to obtain a smooth and uniform dough and is essential since it allows the subsequent swelling of the dough. This step must be performed immediately after the dough preparation step.

Before folding the dough in half for the last time, it is preferably sprinkled with a flour. In the preferred embodiment remilled durum wheat semolina is used which, being coarse, isolates the two folded layers of dough well, which form a composite puff pastry.

The composite puff pastry thus obtained is then allowed to rest for a predefined number of hours so as to allow slow rising.

Preferably, the composite puff pastry is left to rest at a temperature comprised between 2°C and 10°C.

More preferably, it is left to rest at about 5°-6°C. The duration of the rest step depends on the strength of the flour: the stronger the flour, the longer the rest step necessary to allow the rising of the dough.

For example, in an embodiment using flour with strength W of about 350 (first two examples described below), the rest step must be at least 24 hours and may last up to 2 days to allow the gluten to relax more, therefore making the subsequent steps easier to perform.

If using semolina or rye flour, which are weak flours, the rest step is 24 hours at the most.

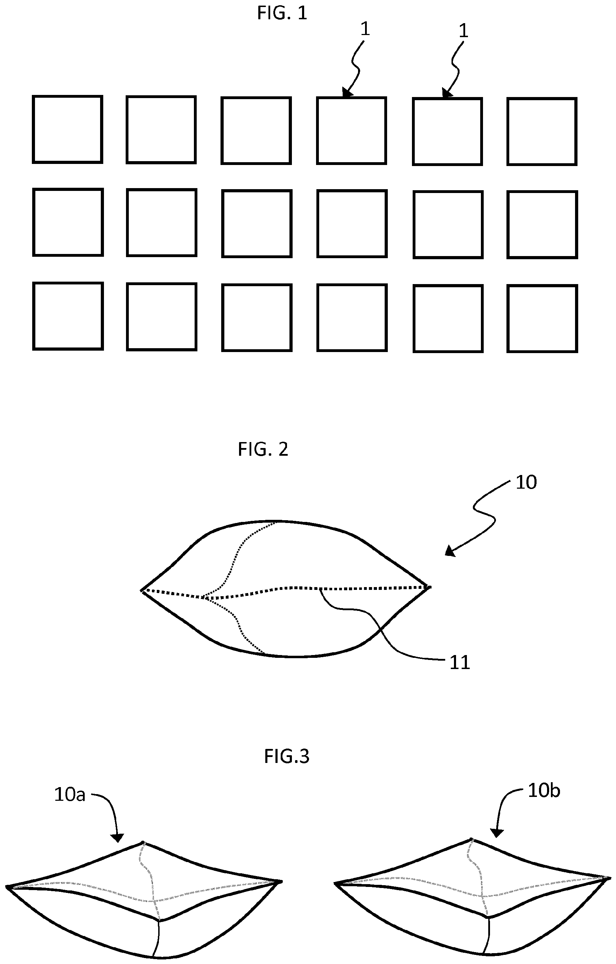

After rising, the height of the composite puff pastry is lowered until it reaches a height comprised between 0.5 mm and 1 mm. Such height lowering is performed gradually so as not to spoil the composite puff pastry. For that purpose, at first the composite puff pastry is passed into a sheeter machine of the prior art, which reduces its height to about 0.8 mm, after which the dough is collected (for example with the aid of a rolling pin) and is passed into a calibrator which reduces its height to about 0.5 mm. Once reduced to the desired height, the composite puff pastry is cut into pieces of predefined shape and size. Such pieces or unfinished products are illustrated in figure 1, indicated by number 1.

For example, the composite puff pastry is cut into substantially rectangular pieces 1. More preferably, the pieces 1 have a substantially square extension, with dimensions of 3 cm x 3 cm circa.

Alternatively, the pieces 1 have an elongated shape with dimensions of 1.5 cm x 7 cm circa.

In another variation, the cut pieces 1 have a substantially triangular or rhomboidal shape.

In all the embodiments, it is essential for the unfinished products 1 to have a geometrical shape that has corners and straight sides, which keep the unfinished products 1 closed during baking, preventing the swelling caused by the heat causing them to open at the perimeter edge thereof. The cut pieces 1 are arranged on a baking tray, at least 1 mm apart to allow their correct development in the oven.

Preferably, before baking the dough must be damp to avoid the formation of the so-called "skin". In fact, the formation of skin creates a barrier on the surface of the dough which prevents its correct development. Furthermore, once the product is divided the different thickness of the two overlapping layers is clear: a layer with a surface skin will be thicker and will swell less. By keeping the dough/composite puff pastry damp with a mist of water this disadvantage is prevented and excellent products can be baked. Preferably, the pieces 1 are baked straight after cutting. In this way, it is possible to prevent the composite puff pastry losing its "strength".

The temperature is initially set between 200°C and 230°C circa, after which the temperature is immediately lowered to between 150°C and 180°C circa for about 12-20 minutes. In this way, the pieces 1 receive a heat hit (at 200°C-230°C) straight away then being immediately dried and toasted at about 150°C-180°C. For example, for 15 minutes of baking at 170°C the oven is kept closed, after which baking continues for about another 5 minutes with the oven open (still at 170°C). In this way the products are toasted better.

During baking, the pieces or unfinished products 1 swell in the centre producing the final baked products. One of such baked products is illustrated in figure 2, indicated by number 10. Such product 10 is hollow and has a line of weakening 11 along the perimeter edge of the starting unfinished product 1. Such line of weakening 11 follows for example the rectangular perimeter of the starting unfinished products 1. Grasping the final product 10 in a hand and exerting light pressure with the fingers on the line of weakening 11 causes the product to separate into two concave portions 10a, 10b.

In a preferred embodiment, the composite puff pastry is obtained by folding the refined dough in half, each half of the dough constituting a layer.

For a sweet or semi-sweet dough, icing sugar can be sprinkled onto the final products obtained or a tempered chocolate covering can be provided or other types of coverings so as to make the product even more appealing.

To understand the invention better, the compositions of the dough to which the process was applied are reported below.

In a first example, the dough was prepared starting from the following ingredients:
- 2000 g of type 1 flour, with strength W of about 350;
- 700 g of water;
- 40 g of salt;
- 20 g of brewer's yeast;
- 40 g of malt extract with zero diastatic power (0 P.U.);
- 80g of vegetable fat;
- 100 g of organic extra virgin olive oil, 100% Italian.

The dough, once refined, was sprinkled with a veil of remilled durum wheat semolina flour, folded in half and left to rest at the temperature of about 5°C for 24-48 hours.

The risen dough is soft and swollen in appearance. To touch, the dough is smooth.

The unfinished products obtained with this dough are reduced to a height of about 0.5 mm and, once cooked, produce finished products about 2.5 cm tall, resistant to the touch but easily openable without breaking or crumbling. Such products are very friable.

In a second example, the dough was prepared starting from the following ingredients.
- 2000 g of type 1 flour, with strength W of about 350;
- 600 g of water;
- 40 g of salt;
- 20 g of brewer's yeast;
- 40 g of malt extract with zero diastatic power (0 P.U.);
- 80g of vegetable fat;
- 100 g of organic extra virgin olive oil, 100% Italian;
- 200 g of grated Parmigiano Reggiano cheese (12 months' aging).

The dough, once refined, was sprinkled with a veil of remilled durum wheat semolina flour, folded in half and left to rest at the temperature of about 5°C for 24-48 hours.

The dough obtained has the same dough consistency as the first example, i.e. soft, swollen and smooth to touch.

The baking step is performed carefully and in a controlled manner to prevent the cheese developing an unpleasant cooked taste.

In a third example, the dough was prepared starting from the following ingredients:
- 1000 g of "Tumminia" variety wholegrain semolina flour;
- 1000 g of type 1 flour, with strength W of about 350;
- 700 g of water;
- 40 g of salt;
- 20 g of brewer's yeast;
- 40 g of malt extract with zero diastatic power (0 P.U.);
- 80g of vegetable fat;
- 100 g of Sicilian extra virgin olive oil.

The dough, once refined, was sprinkled with a veil of remilled durum wheat semolina flour, folded in half and left to rest at the temperature of about 5°C for 24 hours.

The dough looks darker as the flour used is wholegrain, therefore also containing the bran.

Since semolina flour is a weak flour, the dough will be less developed than those obtained in the two previous examples. To taste the product will be particularly appreciated due to the use of an extremely aromatic semolina as "Tumminia" semolina is and a fine oil such as Sicilian extra virgin is. From the description and the tests performed the characteristics of the process for making baked products according to the present invention appear clear, as do the advantages thereof.

In particular, the use of strong or special flour in combination with non-diastatic malt extract or with diastatic power no greater than 5000 P.U. allows the rising step to be extended and hence guarantee that the final products obtained are light and friable.

Furthermore, dusting the dough at the end of the refining step, before the last folding, facilitates the separation of the baked products along the line of weakening, preventing the formation of cracks or the crumbling of the products.

Fundamental elements for the correct development of the products are the rolling, the creation of a precise cut in the refined and lowered dough, and the provision of pieces or unfinished products at least 1 mm apart from one another during baking.

In order to facilitate the comparison with the products described in document EP1574137, the Applicant has repeated the method, in relation to the only example shown therein.

Firstly, it must be noted that in EP1574137, the preparation of the dough takes place at two times: pre-dough, rising, dough and second rising. The relatively higher temperature (26°C instead of 2°-10°C as in the claimed invention) and the high degree of humidity set during the rising in EP1574137 make the dough much more damp and slack than that obtained with the claimed invention.

In EP1574137 the presence of a chemical yeast mixed with the separation agent is essential to determine the swelling of the dough during baking in the oven. On the other hand, in the claimed invention no chemical swelling agent is used. In fact, in the claimed invention it is particularly the refining (or rolling) step before rising that makes the baked pieces swell without needing any chemical agents.

Furthermore, the final product of EP1574137 is not a whole hollow body, but two concave parts, which are obtained by spontaneous separation. On the other hand, in the claimed invention a whole baked product is obtained, which can be divided later, for example, by pressing with fingers on a line of weakening.

In particular, in all the examples described in the invention, the final products obtained are voluminous and resistant if they are not opened, but at the same time easily openable along the perimeter edge with light finger pressure, thus obtaining two concave portions or shells to be filled, both with solid and semi-solid dishes.

The products obtained are also particularly appealing and tasty as high quality savoury snacks and healthier than traditional crisps.

The sweet or semi-sweet variations are particularly tasty and interesting, allowing in turn the two concave portions to be filled with dense products, such as hazelnut creams, chocolate, etc.

In the claimed invention, the dividability of the baked products into the two concave portions is also provided by the choice of the substantially angular shape of the unfinished products. For example, the rectangular or square shape guarantees the presence of corners that keep the unfinished products closed during baking, preventing the swelling caused by heat opening them at their perimeter edge. This characteristic is more difficult to create in the case of round shapes, i.e. without corners to seal the swollen piece.

Furthermore, the choice of ingredients and the type of processing allow final products to be obtained with a shelf life of various months (up to 6 months) and excellent quality.

## Claims

1. Process for making baked products (10), comprising the steps of:
preparing a dough with flour, water, salt, olive oil or sunflower oil, vegetable fat, leaven and malt extract;
refining the dough obtained by passing it several times under a plurality of rollers or rotating cylinders and obtaining two layers thereof;
interposing a flour between the two layers;
laying the two layers one over the other so as to obtain a composite puff pastry;
allowing the composite puff pastry to rest at a temperature comprised between 2°C and 10°C for a predefined number of hours in such a way as to let it rise;
gradually lowering the height of the risen composite puff pastry until making it reach a height comprised between 0.5 mm and 1 mm;
cutting the rolled out composite puff pastry into a plurality of pieces or unfinished products (1) having a geometrical shape with a plurality of edges;
arranging the cut pieces (1) at least 1 mm apart;
baking the pieces (1) obtained at a temperature of between 200°C- 230°C, and then baking them for 12-20 minutes at a temperature of between 150°C-180°C until obtaining hollow baked products (10), each of said baked products (10) being a whole product but having a line of weakening (11) along the perimeter edge of the starting unfinished product (1).

2. Process according to claim 1, wherein the flour used to prepare the dough has a strength W of 350.

3. Process according to claim 2, wherein the composite puff pastry is allowed to rest for 24-48 hours.

4. Process according to claim 1, wherein the flour used to prepare the composite puff pastry is an organic whole grain semolina flour or an organic whole grain spelt flour.

5. Process according to claim 4, wherein the composite puff pastry is allowed to rest for a maximum of 24 hours.

6. Process according to any one of the preceding claims, wherein the malt extract used to prepare the dough has a diastatic power no greater than 5000 P.U. or a diastatic power of zero.

7. Process according to any one of the preceding claims, wherein before baking the pieces (1) are sprayed with a mist of water in order to avoid the formation of "skin".

8. Process according to any of the preceding claims, wherein the dough is prepared according to the following percentages with respect to the weight of the flour: water 35%, iodized salt 2%, malt extract 2%, compressed leaven 1%.

9. Process according to any of the preceding claims, wherein the composite puff pastry is obtained by folding the refined dough in half, each half of the dough forming a layer.

10. Process according to any of the preceding claims, wherein the flour interposed between the two layers of the dough is remilled durum wheat semolina.

11. Process according to any one of the preceding claims, wherein the step of gradually lowering the height of the risen composite puff pastry is carried out by passing the composite puff pastry through a sheeter machine until reducing the height to around 0.8 mm, and subsequently passing it through a calibrator until obtaining a height of 0.5 mm.

12. Process according to any one of the preceding claims, wherein the cut pieces (1) have a substantially rectangular shape.

## Patentansprüche

1. Verfahren zur Herstellung von Backprodukten (10), umfassend die Schritte von: Herstellen eines Teiges mit Mehl, Wasser, Salz, Olivenöl oder Sonnenblumenöl, Pflanzenfett, Sauerteig und Malzextrakt;
Verfeinern des erhaltenen Teiges, indem er mehrmals unter einer Vielzahl von Rollen oder rotierenden Zylindern durchläuft und Erhalten von zwei Schichten davon;
Zwischenschalten von Mehl zwischen den zwei Schichten;
Legen der zwei Schichten eine auf die andere, um einen ausgerollten Verbundteig zu erhalten;
dem ausgerollten Verbundteig erlauben, bei einer Temperatur zwischen 2° C und 10 °C für eine vorgegebene Anzahl von Stunden zu ruhen, so dass er aufgeht;
schrittweises Absenken der Höhe des aufgegangenen, ausgerollten Verbundteiges, bis er eine Höhe zwischen 0,5 mm und 1 mm erreicht; Schneiden des ausgerollten Verbundteiges in eine Vielzahl von Stücken oder unfertigen Produkten (1), wobei sie eine geometrische Form mit mehreren Kanten aufweisen;
Anordnen der geschnittenen Stücke (1) mindestens 1 mm auseinander;
Backen der erhaltenen Stücke (1) bei einer Temperatur von zwischen 200 °C- 230 °C, und dann sie für 12-20 Minuten bei einer Temperatur zwischen 150 °C-180 °C backen, bis hohle Backprodukte (10) erhalten werden, wobei jeder der Backprodukte (10) ein vollständiges Produkt ist, aber eine Schwächungslinie (11) entlang der Umfangskante des unfertigen Ausgangsprodukts (1) aufweist.

2. Verfahren nach Anspruch 1, wobei das Mehl, das für die Herstellung des Teiges verwendet wird, eine Festigkeit W von 350 aufweist.

3. Verfahren nach Anspruch 2, wobei dem ausgerollten Verbundteig erlaubt ist, für 24-48 Stunden zu ruhen.

4. Verfahren nach Anspruch 1, wobei das Mehl, das für die Herstellung des ausgerollten Verbundteiges verwendet wird, ein organisches Vollkorngrießmehl oder ein organisches Dinkelvollkornmehl ist.

5. Verfahren nach Anspruch 4, wobei dem ausgerollten Verbundteig erlaubt ist, für maximal 24 Stunden zu ruhen.

6. Verfahren nach einem der vorhergehenden Ansprüche, wobei der Malzextrakt, der für die Herstellung des Teiges verwendet wird, eine diastatische Kraft nicht größer als 5000 P.U. oder eine diastatische Kraft von Null aufweist.

7. Verfahren nach einem der vorhergehenden Ansprüche, wobei die Stücke (1) vor dem Backen mit einem Wassernebel besprüht werden, um die Bildung von einer "Haut" zu vermeiden.

8. Verfahren nach einem der vorhergehenden Ansprüche, wobei der Teig gemäß der folgenden Prozentsätze in Bezug auf das Gewicht des Mehls hergestellt wird: Wasser 35%, jodiertes Salz 2%, Malzextrakt 2%, komprimierter Sauerteig 1%.

9. Verfahren nach einem der vorhergehenden Ansprüche, wobei der ausgerollte Verbundteig durch das Falten des verfeinerten Teiges in die Hälfte erhalten wird, wobei jede Hälfte des Teiges eine Schicht bildet.

10. Verfahren nach einem der vorhergehenden Ansprüche, wobei das Mehl, das zwischen den zwei Schichten des Teiges zwischengeschaltet wird, wiedergemahlener Hartweizengriess ist.

11. Verfahren nach einem der vorhergehenden Ansprüche, wobei der Schritt des allmählichen Absenkens der Höhe des aufgegangenen, ausgerollten Verbundteiges ausgeführt wird, indem der ausgerollte Verbundteig durch eine Schneidmaschine passiert wird, bis die Höhe auf etwa 0,8 mm reduziert wird und anschließend ihn durch einen Kalibrator passiert wird, bis eine Höhe von 0,5 mm erhalten wird.

12. Verfahren nach einem der vorhergehenden Ansprüche, wobei die geschnittenen Stücke (1) eine im wesentlichen rechteckige Form aufweisen.

## Revendications

1. Procédé pour la préparation de produits de boulangerie (10), comprenant les étapes de : préparer une pâte avec de la farine, de l'eau, du sel, de l'huile d'olive ou de tournesol, de la graisse végétale, du levain et de l'extrait de malt ;
affiner la pâte obtenue en la passant à plusieurs reprises sous une pluralité de rouleaux ou de cylindres rotatifs et obtenir deux couches de celle-ci ;
interposer une farine entre les deux couches ;
étendre les deux couches l'une sur l'autre de manière à obtenir une abaisse composite ;
laisser l'abaisse composite se reposer à une température comprise entre 2 °C et 10 °C pendant un nombre d'heures prédéfini pour lui permettre de lever ;
réduire graduellement la hauteur de l'abaisse composite levée jusqu'à ce qu'elle atteigne une hauteur comprise entre 0,5 mm et 1 mm ;
couper l'abaisse composite en une pluralité de morceaux ou de produits non finis (1) ayant une forme géométrique comportant une pluralité de bords ;
disposer les morceaux coupés (1) en les espaçant d'au moins 1 mm ;
cuire les morceaux (1) obtenus à une température comprise entre 200 °C et 230 °C, puis les cuire pendant 12-20 minutes à une température comprise entre 150 °C et 180 °C jusqu'à obtenir des produits de boulangerie creux (10), chacun desdits produits de boulangerie (10) étant un produit entier mais qui comporte une ligne de faiblesse (11) le long du bord périphérique du produit non fini de départ (1).

2. Procédé selon la revendication 1, dans lequel la farine utilisée pour préparer la pâte possède une force W de 350.

3. Procédé selon la revendication 2, dans lequel l'abaisse composite peut se reposer pendant 24-48 heures.

4. Procédé selon la revendication 1, dans lequel la farine utilisée pour préparer l'abaisse composite est une farine de semoule complète organique ou une farine d'épeautre complet organique.

5. Procédé selon la revendication 4, dans lequel l'abaisse composite ne peut se reposer que pendant un maximum de 24 heures.

6. Procédé selon l'une quelconque des revendications précédentes, dans lequel l'extrait de malt utilisé pour préparer la pâte possède un pouvoir diastasique n'étant pas supérieur à 5 000 U.P. ou un pouvoir diastasique égal à zéro.

7. Procédé selon l'une quelconque des revendications précédentes, dans lequel avant cuisson, les morceaux (1) sont pulvérisés d'eau afin d'éviter la formation de « peau ».

8. Procédé selon l'une quelconque des revendications précédentes, dans lequel la pâte est préparée selon les pourcentages respectifs suivants par rapport au poids de la farine: eau 35 %, sel iodé 2 %, extrait de malt 2 %, levain comprimé 1 %.

9. Procédé selon l'une quelconque des revendications précédentes, dans lequel l'abaisse composite est obtenue en pliant la pâte affinée en deux, chaque moitié de pâte formant une couche.

10. Procédé selon l'une quelconque des revendications précédentes, dans lequel la farine interposée entre les deux couches de pâte est de la semoule de blé dur remoulue.

11. Procédé selon l'une quelconque des revendications précédentes, dans lequel l'étape consistant à diminuer graduellement la hauteur de l'abaisse composite levée est effectuée en passant l'abaisse composite à travers un laminoir jusqu'à une réduction de la hauteur d'environ 0,8 mm et, subséquemment, en la passant à travers un calibreur jusqu'à obtenir une hauteur de 0,5 mm.

12. Procédé selon l'une quelconque des revendications précédentes, dans lequel les morceaux coupés (1) ont une forme substantiellement rectangulaire.
